# EUROPEAN PATENT APPLICATION

(11) **EP 4 187 169 A1**
(43) Date of publication of application: **31.05.2023**
(21) Application number: 22209642.2
(22) Date of filing: 25.11.2022
(51) Int. Cl.: F24F 12/00, F24F 13/20

(54) **AIR TRANSFER AND TREATMENT DEVICE**

(30) Priority: 26.11.2021 CZ 20210053
(71) Applicant: Alteko, s.r.o., 26724 Hostomice (CZ)
(72) Inventor: KRUPA, Radislav, 14300 Praha 4 (CZ); VOSÁHLO, Michal, 26727 Skuhrov (CZ)
(74) Representative: Kratochvil, Vaclav

(57) **Abstract**

An air transfer and treatment device for supplying outdoor fresh air to an indoor building space and extracting contaminated air from the indoor building space comprising a housing having a height (1), a width (2) and a depth (3) with a supply fan (4) an extraction fan (6) and a heat recovery exchanger (10), wherein the total outer depth (3) of the housing has a maximum dimension equal to 1/2 of the outer diameter of the supply impeller (5) of the supply fan (4) for supplying air to the ventilated building space, and also equal to 1/2 of the outer diameter of the extraction impeller (7) of the extraction fan (6) for extracting air from the ventilated building space. The total outer depth (3) of the housing has preferably a maximum dimension equal to 1/10 of the total outer height (1) and the total outer width (2).

## Description

### Field of the Invention

The invention relates to an air transfer and treatment device for providing outdoor fresh air supply to an indoor building space and extracting contaminated air from the indoor building space, comprising a housing having a height, width and depth, and having an inlet fan, an extraction fan and a heat recovery exchanger. The device can operate as a one-way or two-way ventilation unit.

### Background Art

Currently, there are various designs of air transfer and air treatment devices used mainly for ventilation of indoor building spaces, such as one-way or two-way ventilation units, especially wall, soffit or cabinet designs.

The disadvantage of these designs is that they use fan impellers for air transport with outer diameters of conventional values equal to the smallest outer installation dimension of the ventilation unit. These impellers are a source of radiated acoustic power. A high value of radiated specific sound power is one of the important limiting factors for the practical usability of a ventilation unit.

Another disadvantage of these ventilation units is that their smallest outer installation dimension is too large with respect to the volume of air transferred and its total pressure and in many cases does not allow covering the entire area of the vertical or horizontal building structure.

### Summary of the Invention

The above disadvantages are to a large extent removed by use of an air transfer and treatment device for providing outdoor fresh air supply to an indoor building space and extracting contaminated air from the indoor building space, comprising a housing having a height, width and depth, and having an inlet fan, an extraction fan and a heat recovery exchanger. Its principle is that the total outer depth of the housing has a maximum dimension equal to 1/2 of the outer diameter of the intake impeller of the fan supplying air to the ventilated building space and 1/2 of the outer diameter of the outlet impeller of the fan extracting air from the ventilated building space.

In the preferred embodiment, the total outer depth of the housing has a maximum dimension equal to 1/10 of the total outer height and the total outer width.

The air transfer and treatment device according to the present invention has a distinctly flat topology. Its one outer installation dimension is significantly smaller, i.e. 10 times or more, than either of the other two outer dimensions of the imaginary envelope block. This technical solution of a air transfer and treatment device with a distinctly flat topology allows the area of the ventilation unit to be covered in the entire area of the vertical or horizontal building structure so that one dimension of the ventilation unit extends as little as possible into the interior space of the building.

This air transfer and treatment device with its distinctly flat topology also allows the use of a fan with an impeller diameter substantially larger than the minimum outer dimension of the air transfer and treatment device, i.e. 2 times or more, thereby allowing a reduction in the angular speed of rotation of the fan impeller and consequently reducing the specific acoustic power emitted by the whole device.

The device according to the present invention can be preferably installed on a vertical or horizontal building structure so that its flat shape with minimal depth significantly improves the aesthetics of the space. Preferably, elements for reducing the acoustic power radiated to the inlet, outlet and surroundings of the device are integrated in the device.

### Explanation of Drawings

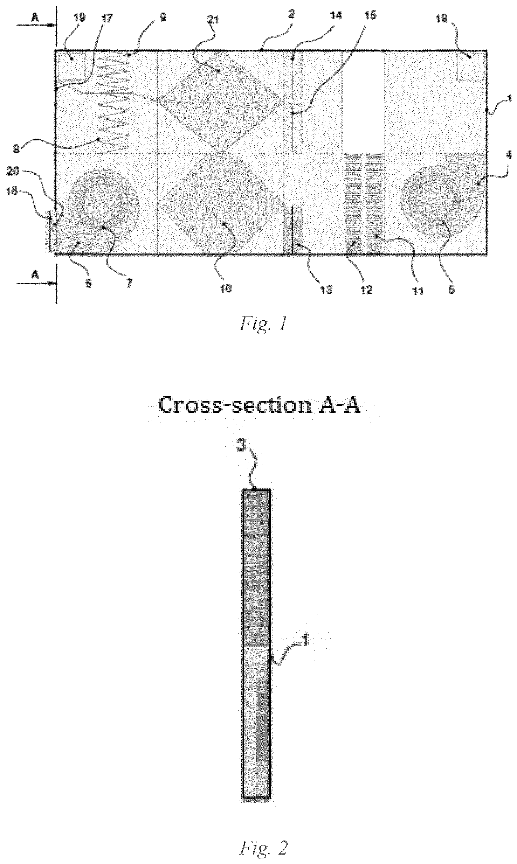

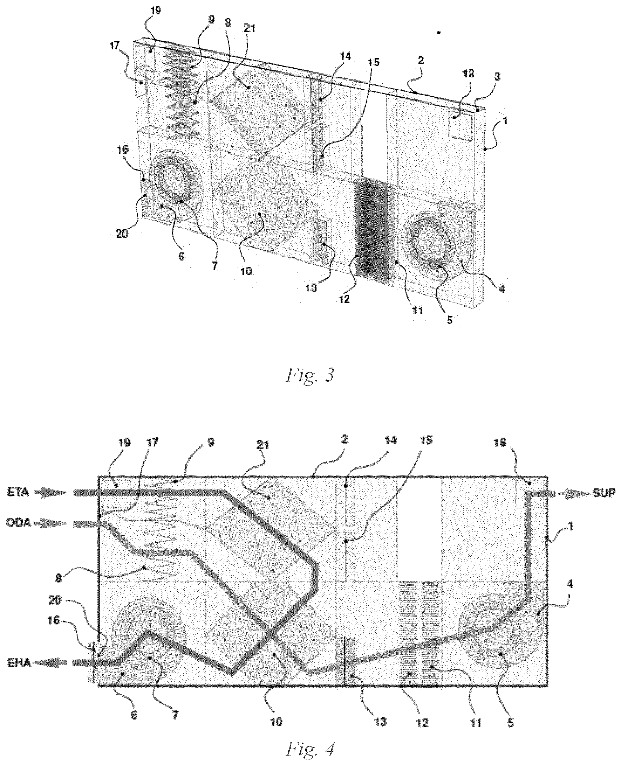

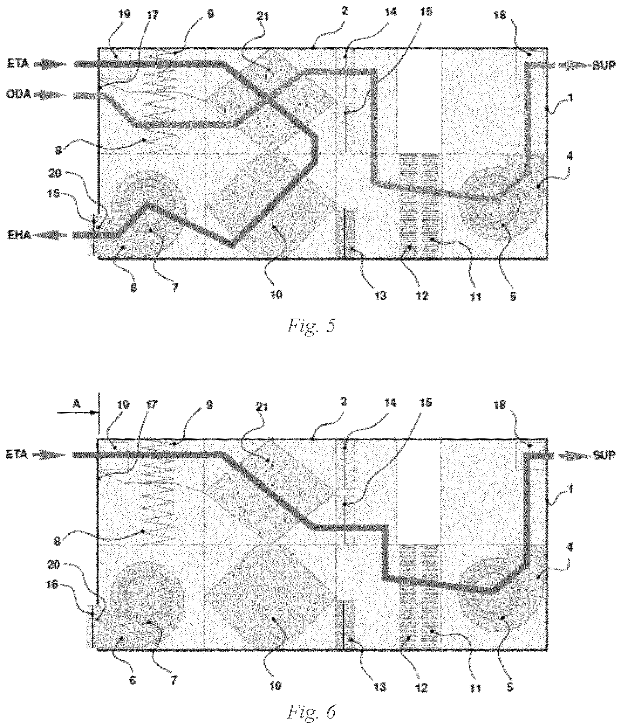

An air transfer and treatment device for supplying outdoor fresh air to an indoor building space and extracting polluted air from an indoor building space according to the present invention will be described in more detail in a particular example embodiment with the aid of the accompanying drawings, wherein Fig. 1 shows a plan view of an exemplary air transfer and treatment device with a distinctly flat topology. Fig. 2 shows a top view A-A from Fig. 1 of the air transfer and treatment device with a distinctly flat topology. Fig. 3 shows an axonometric view of the air transfer and treatment device with a distinctively flat topology. Fig. 4 shows the air flow paths through the device in heat recovery mode without recirculation of the indoor air. Fig. 5 shows the air flow paths through the device in the mode without heat recovery and without recirculation of the indoor air. Fig. 6 shows the air flow paths through the device in the mode without heat recovery, only with recirculation of the indoor air.

### Examples of the Invention Embodiments

An exemplary air transfer and treatment device for supplying outdoor fresh air to an indoor building space and extracting contaminated air from the indoor building space comprising a housing having a height 1, a width 2 and a depth 3 with a supply fan 4, an extraction fan 6 and a heat recovery exchanger 10, wherein the total outer depth 3 of the housing has a maximum dimension equal to 1/2 of the outer diameter of the supply impeller 5 of the supply fan 4 for supplying air to the ventilated building space, and also equal to 1/2 of the outer diameter of the extraction impeller 7 of the extraction fan 6 for extracting air from the ventilated building space.

The air transfer and treatment device with a distinctly flat topology consists of a housing with a total outer height 1, a total outer width 2 and a total outer depth 3 operating in heat recovery mode and without recirculation of the internal air according to Fig. 4. The total outer depth 3 of the housing has a maximum dimension equal to 1/10 of the total outer height 1 and the total outer width 2. There are suitably arranged functional elements therein, such as an inlet fan 4 with an impeller 5 having an outer diameter, which draws in outside fresh air (ODA) through an inlet port 17 via an inlet filter 8, heat exchanger 10 for heat recovery, shut-off damper 13, an air heater 11, air cooler 12, and discharges it into the internal building space through an outlet port 18 (SUP), and an extraction fan 6 with an impeller 7 having an outer diameter, which draws the contaminated air from the internal building space through an inlet port 19 (ETA) via an inlet filter 9, a bypass section 21 and a heat exchanger 10 for heat recovery to the outer space through an exhaust opening 20 via a shut-off damper 16 (EHA).

Another air transfer and treatment device with a distinctly flat topology consists of a housing with a total outer height 1, a total outer width 2 and a total outer depth 3 operating in the mode without heat recovery and without recirculation of the internal air according to Fig. 5. There are suitably arranged functional elements therein, such as an inlet fan 4 with an impeller 5 having an outer diameter, which draws in outside fresh air (ODA) through an inlet port 17 via an inlet filter 8, another shut-off damper 14, an air heater 11, an air cooler 12, and discharges it into the internal building space through an outlet port 18 (SUP), and an extraction fan 6 with an impeller 7 having an outer diameter, which draws the contaminated air from the internal building space through an inlet port 19 (ETA) via an inlet filter 9, a bypass section 21 and a heat exchanger 10 for heat recovery to the outer space through an exhaust opening 20 (EHA) via a shut-off damper 16.

Yet another air transfer and treatment device with a distinctly flat topology consists of a housing with a total outer height 1, a total outer width 2 and a total outer depth 3 operating in the mode without heat recovery with recirculation of the internal air according to Fig. 6. There are suitably arranged functional elements therein, such as an inlet fan 4 with an impeller 5 having an outer diameter, which draws in contaminated air from the internal construction space through an inlet port 19 (ETA) via an inlet filter 9, a bypass part 21, an air heater 11, an air cooler 12 and discharges it into the internal construction space through an outlet opening 18 (SUP).

The air transfer and treatment devices with a distinctly flat topology can be suitably placed on a horizontal or vertical building structure so that they visually form an integrated whole with the horizontal or vertical building structure.

The device can be used, for example, for autonomous ventilation of school classrooms, offices and work areas, where the room layout allows it due to its size, shape and suitable location in relation to the building perimeter shell.

### Industrial Applicability

The device for air transfer and treatment with a distinctly flat topology can be used for ventilation of indoor building spaces, as a one-way ventilation unit or a two-way ventilation unit.

## Claims

1. An air transfer and treatment device for supplying outdoor fresh air to an indoor building space and extracting contaminated air from the indoor building space comprising a housing having a height (1), a width (2) and a depth (3) with a supply fan (4) an extraction fan (6) and a heat recovery exchanger (10), **characterized in that** the total outer depth (3) of the housing has a maximum dimension equal to 1/2 of the outer diameter of a supply impeller (5) of the supply fan (4) for supplying air to the ventilated building space, and also equal to 1/2 of the outer diameter of an extraction impeller (7) of the extraction fan (6) for extracting air from the ventilated building space.

2. The device according to claim 1, **characterized in that** the total outer depth (3) of the housing has a maximum dimension equal to 1/10 of the total outer height (1) and the total outer width (2).
